# EUROPÄISCHE PATENTSCHRIFT

(11) **EP 1 415 829 B1**
(45) Veröffentlichungstag und Bekanntmachung des Hinweises auf die Patenterteilung: **02.03.2005**
(21) Anmeldenummer: 03020375.6
(22) Anmeldetag: 10.09.2003
(51) Int. Cl.: B60H 1/00

(54) **Anordnung eines Temperatursensors zur Ermittlung der Innnenraumtemperatur**
Arrangement of a temperature sensor for determining interior temperature
Dispositif d'un capteur de température pour déterminer la température intérieure

(30) Priorität: 02.11.2002 DE 10251128
(43) Veröffentlichungstag der Anmeldung: 06.05.2004
(73) Patentinhaber: Preh GmbH, 97616 Bad Neustadt a.d. Saale (DE)
(72) Erfinder: Gutbrod, Thomas, Dr., 97291 Thüngersheim (DE); Jeitner, Martin, 97645 Ostheim (DE); Oenning, Günther, 97618 Niederlauer (DE); Schelbert, Harald, Dr., 97631 Bad Königshofen (DE)
(74) Vertreter: Dietrich, Barbara, Dipl.-Ing.

(56) Entgegenhaltungen:
- EP-A- 0 659 599
- EP-A- 1 195 275
- DE-A- 4 024 431
- DE-A- 10 056 694
- US-A- 6 155 492

## Beschreibung

Die Erfindung betrifft eine Anordnung eines Temperatursensors in einem Kraftfahrzeug zur Ermittlung der Innenraumtemperatur für die automatische Regelung derselben.

Zur automatischen Regelung der Innenraumtemperatur in einem Fahrzeug ist es erforderlich, die tatsächliche Innenraumtemperatur zu einem bestimmten Zeitpunkt zu kennen. In der Regel wird dann eine Stellgröße gebildet, welche die Abweichung der tatsächlichen Innenraumtemperatur von der angestrebten Innenraumtemperatur widerspiegelt. Abhängig vom Wert dieser Stellgröße, welche die Differenz zwischen Zielwert und aktuellem Zustandswert wiedergibt, werden unterschiedliche Regeleingriffe im Klimatisierungssystem des Fahrzeuges durchgeführt. Hierzu zählen die Veränderung der Temperatur, mit welcher Luft in den Fahrzeuginnenraum geblasen wird, die Gebläseleistung bzw. Menge der eingeblasenen Luft, sowie die Verteilung der Luftströme auf die verschiedenen Lufteinlaßöffnungen. Ziel der Regeleingriffe ist die Minimierung der Stellgröße.

Ein derartiges Verfahren wirt in der gattungsgemäßen DE 40 24 431 A1 beschrieben. Ausgehend von einem Stand der Technik, der eine gleichmäßige Klimatisierung entsprechend der Größe der Sonneneinstrahlung (Einstrahlrichtung und -menge) durch Steuerung von Luftmengen aus einem linken und einem rechten Luftauslaß vorsieht, wird hier vorgeschlagen, eine automatische sowie eine manuelle Regelung miteinander zu kombinieren, wobei die Wahl des entsprechenden Modus u.a. vom Kriterium Größe der Sonneneinstrahlung abhängig ist und die Temperatur im Fahrgastraum hinzugezogen wird. Die beiden Kriterien werden dann mit festgelegten Werten verglichen. Aus dem Vergleich ergibt sich eine Stellgröße, die eine Regelung hervorruft.

Mit der DE 198 29 143 C1 wird ein weiteres Verfahren zur Änderung der Innenraumtemperatur eines Fahrzeuges offenbart. Zur Kompensation einer Veränderung des Istwertes der Innenraumtemperatur infolge von äußeren Einflüssen, wie beispielsweise niedrige Außentemperatur, sind ein Innenraum-Temperaturfühler sowie ein Außentemperatursensor vorgesehen. Der Innenraum-Temperaturfühler befindet sich im Steuerungsgerät.

Die DE 197 28 803 C1 offenbart eine Anordnung zur Temperaturmessung und/oder -regelung mit einem Gehäuse, das in seinem Innern einen Temperaturfühler zur Messung der außerhalb des Gehäuses gegebenen Raumtemperatur aufweist, wobei eine oder mehrere Wärmequellen in und/oder an dem Gehäuse vorhanden sind. Zusätzlich ist zumindest ein Hilfstemperaturfühler innerhalb des Gehäuses an einer Stelle vorgesehen, deren Temperatur durch den Wärmestrom der Wärmequelle stärker beeinflußt wird als die Temperatur am Temperaturfühler.

Nachteilig bei der letztgenannten Lösung ist die große Abweichung des gemessenen Temperatursignals von der tatsächlichen Innenraumtemperatur aufgrund der großen Störeinflüsse auf den Sensor, sowie die große Trägheit des Sensors, welcher Änderungen der Innenraumtemperatur nur zeitlich verzögert und geglättet erfährt. Daher ist in diesen Fällen ein hoher Aufwand zur Korrektur des Temperatursignals erforderlich.

Die Erfindung stellt sich die Aufgabe, eine Anordnung eines Temperatursensors zur Ermittlung der Innenraumtemperatur aufzuzeigen, die die genannten Nachteile minimiert.

Gelöst wird die Aufgabe durch die Merkmale der Patentanspruchs 1.

Der Erfindung liegt die Idee zugrunde, einen Temperaturfühler bzw. -sensor auf die Außenseite eines Klimabedienteils einer Heizungs-, Lüftungs- und/oder Klimaanlage in Richtung Innenraum weisend aufzubringen. Hierbei kann der Sensor in einer Ebene mit der umliegenden Frontblende des Bedienteils liegen oder aber gegenüber seiner Umgebung in den Fahrzeuginnenraum hinausragen. Das temperaturempfindliche Sensorelement ist auf der Rückseite eines dünnen Elementes oder Mittel mit gutem thermischen Kontakt zum Mittel befestigt. Auf der Rückseite wird der Sensor durch ein vorzugsweise wannenförmiges Kunststoffgehäuse, welches eine möglichst geringe Wärmeleitung aufweist, zum Innenraum des Steuergerätes bzw. Bedienteils abgeschlossen. Dies kann durch Einsetzen des Sensorunterteils in die Blendenfront des Bedienteils oder aber durch direkte Integration einer entsprechenden Form in der Frontblende selbst erfolgten.
Das Mittel, beispielsweise ein dünnes Blech, das den Temperatursensor trägt, wird hierbei in einer bevorzugten Ausführung nur an wenigen Auflagepunkten mit dem Sensorunterteil bzw. der Frontblende verbunden. Ein hierbei entstehender Hohlraum zwischen dem Ober- und Unterteil des Sensorgehäuse kann als isolierender Luftraum leer oder aber mit geeigneten Isolationsmaterial ganz oder teilweise gefüllt werden. Dadurch wird die thermische Isolation zum Bedienteil verbessert.

Anstelle des Blechs, das die Oberfläche zum Fahrgastraum darstellt, sind ein Kunststoffträger mit einer dünnen Metallfolie oder ein anderes Material denkbar, welches einen guten Wärmetransport zwischen dem Temperatursensor und dem Fahrgastraum gewährleistet.
Durch die vorgeschlagene Lösung wird einerseits eine gute thermische Anbindung des Sensorelements an die Luft des Fahrgastraums und andererseits eine möglichst gute Isolation gegenüber dem Steuergerät selbst erreicht, welches als Wärmequelle zu einer Störung des Temperatursignals führen würde. Sich ändernde Innentemperaturen werden mit diesem Sensorelement schnell erfaßt.
Bekanntlich erwärmt sich das Bedienteil durch die elektronischen Bauelemente mit Dauer der Benutzung. Um mögliche Einflüsse auf den Temperatursensor zu kompensieren, ist in Weiterführung der Erfindung vorgesehen, eine Referenztemperatur zu nutzen, welche durch einen weiteren Temperatursensor geliefert wird und vorzugsweise an der Innenseite der Frontblende an der Position positioniert wird, an der der Temperatursensor an der Außenseite des Bedienteils angebracht ist. Durch zusätzliche thermische Isolationsmaßnahmen zwischen dem Referenzfühler und den Wärmequellen im Bedienteil kann eine Optimierung der Messung erreicht werden. Alternativ kann der Referenztemperatursensor auch im Bedienteil, beispielsweise auf einer Platine oder Leiterplatte des Steuergerätes positioniert werden.

Befindet sich der Temperatursensor im Bereich ausströmender Luft, können Veränderungen der Menge und der Verteilung der durch das Klimagebläse eingeblasenen Luft zu einer Beeinflussung des Temperatursignals führen, da der Wärmeübergang zwischen dem Temperatursensor und dem Fahrzeuginnenraum stark von der Luftströmung vor dem Sensor abhängt. Hier bietet sich die Einbindung der entsprechenden Daten, wie Gebläseleistung und Luftverteilung, beispielsweise über die Stellung der Klappen des Klimaaggregats, aus einem fahrzeuginternen Datenbus an, um einen Korrekturwert zu bestimmen.

Einem möglichen Sonneneinstrahleinfluß auf den Temperatursensor kann mittels weiterer Korrekturmaßnahmen begegnet werden, beispielsweise mit einem Fotosensor, der in unmittelbarer Nähe zum Temperatursensor positioniert wird. Bei geeigneter Wahl der Winkelabhängigkeit der Empfindlichkeit des Fototransistors wird das Signal dieses Sensors als direkte Größe für die Erwärmung des Temperatursensors durch die Sonneneinstrahlung verwendet. Anhand des zeitlichen Verlaufs der Sonneneinstrahlung auf den Sensor kann dann die Erwärmung des Temperatursensors ermittelt und das Temperatursignal um den entsprechenden Betrag korrigiert werden.

Die Sensoroberfläche, welche in den Fahrgastraum weist, kann als Designteil mit einer von der Umgebung abweichender Oberfläche oder auch Farbe in Farbe mit der Blende lackiert versehen werden. Soweit es möglich ist, können auch Strukturen, z.B. Kühlrippen an der Sensoroberfläche angebracht werden, um zusätzlich den Wärmetransport bzw. Wärmeübergang zwischen Fahrgastraum und Temperatursensor zu verbessern.

Die vorgeschlagene Anordnung des Temperatursensors auf dem Bedienteil kommt zudem dem Bestreben einer größeren Designfreiheit entgegen. Auch bei zukünftigen Klimasteuergeräten ohne Lüftungsgitter ist diese Lösung anwendbar.

Anhand eines Ausführungsbeispieles mit Zeichnung soll die Erfindung näher erläutert werden.

Es zeigt
- Fig. 1: ein Bedienteil in einer Draufsichtdarstellung,
- Fig. 2: eine Schnittdarstellung im Schnitt A-A aus Fig. 1.

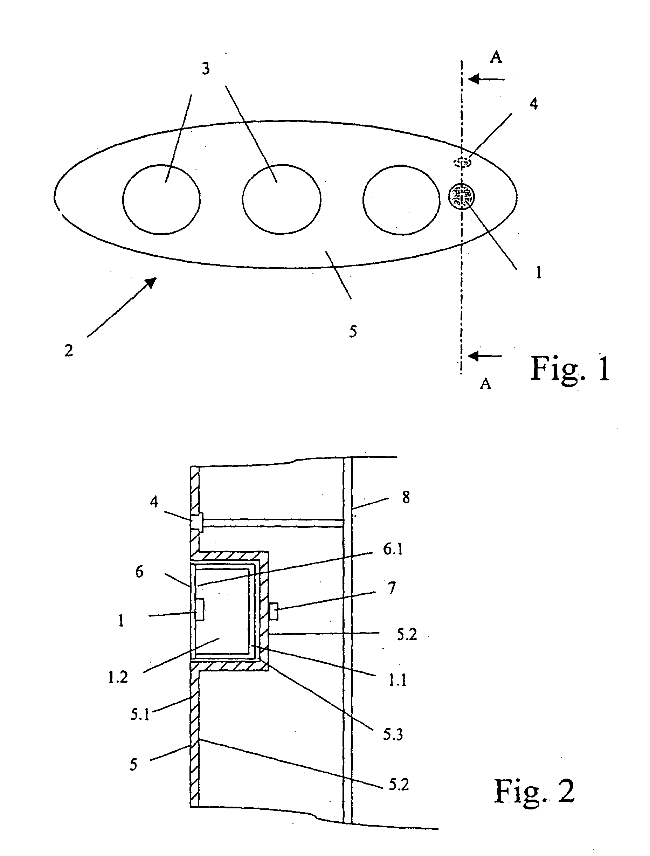

Die Fig. 1 dient zur Veranschaulichung der bereits beschriebenen Anordnung eines Temperatursensors 1 an/in der Oberfläche eines Bedienteils 2 für eine nicht näher dargestellte Heizungs-, Lüftungs- und Klimaanlage. Das Bedienteil 2 weist nicht näher beschriebene Betätigungselemente 3 auf und ist vorzugsweise in einer Frontblende 5 eines gleichfalls nicht näher dargestellten Kraftfahrzeuges in einer Ausnehmung 5.3 integriert. Mit 4 ist ein Fotosensor gekennzeichnet, dessen Funktion später noch beschrieben wird.

Fig. 2 stellt eine Schnittdarstellung im Schnitt A-A durch das Bedienteil 2 dar.
Der Temperatursensor 1 ist auf die Außenseite des Bedienteils 2 aufgebracht und befindet sich in einer Ebene mit der umliegenden Frontblende 5 des Bedienteils 2. Das temperaturempfindliche Sensorelement 1 ist auf der Rückseite 6.1 eines dünnen Blechs 6 mit gutem thermischen Kontakt zum Blech 6 befestigt, was beispielsweise durch Klebung geschaffen werden kann. Auf der Rückseite wird das Sensorelement 1 durch ein wannenförmiges Kunststoffgehäuse 1.1, welches eine möglichst geringe Wärmeleitung aufweist abgeschlossen. Das Kunststoffgehäuse 1.1 ist mit dem Sensor 1 und dem Blech 6 in die Blendenfront 5 des Bedienteils 2 eingesetzt und weist zum Innenraum des Steuergerätes bzw. Bedienteils 2.

Das Blech 6, das den Temperatursensor 1 trägt, ist vorzugsweise nur an wenigen Auflagepunkten mit der Frontblende 5 und dem Kunststoffgehäuse 1.1 verbunden. Ein Hohlraum 1.2 zwischen dem Blech 6 und dem Kunststoffteil 1.1 des Sensors 1 ist vorzugsweise mit einem wärmeisolierenden Mittel gefüllt.
Eine Referenztemperatursensor 7 ist an der Innenseite 5.2 der Frontblende 5 an der Position positioniert, an der der Temperatursensor 1 an der Außenseite 5.1 des Bedienteils 2 angebracht ist.
Der Fotosensor 4 ist bevorzugt in unmittelbarer Nähe zum Temperatursensor 1 positioniert.
Mit 8 ist eine Leiterplatine des Bedienteils 2 gekennzeichnet, durch welche eine elektrische Verbindung der einzelnen elektronischen Bauelemente miteinander oder zueinander geschaffen wird.

Die Funktionsweise ist allgemein ausgeführt wie folgt:
Der Temperatursensor 1 mißt die Inneraumtemperatur in Nähe des Bedienteils 2. Die gemessene Temperatur wird in bekannter Art und Weise mit einem vorgegebenen Wert verglichen und eine aus dem Vergleich resultierende Stellgröße übernimmt dann den Eingriff in die Regelung. Betriebsbedingte Erwärmungen des Bedienteils 2 werden durch den Referenztemperatursensor 7 ermittelt und der gemessene Temperaturwert um diesen Betrag korrigiert. Sonneneinstrahlungen werden über den Fotosensor 4 erkannt, wobei die sich daraus resultierende Erwärmung des Temperatursensors 1 bei der Bestimmung der Stellgröße berücksichtigt wird. Auch die Informationen über die Luftströmung vor dem Temperatursensor 1 fließen bei der Ermittlung der Stellgröße in den Korrekturwert mit ein. Diese können auf fahrzeuginternen Daten eines Datenbusses gewonnen werden.

## Patentansprüche

1. Anordnung bestehend aus einem Temperatursensor (1) und einem Klimabedienteil zur Ermittlung der Innenraumtemperatur, **dadurch gekennzeichnet, dass**
- der Temperatursensor (1) auf der Außenseite (5.1) eines Klimabedienteils (2) einer Heizungs-, Lüftungs- und/oder Klimaanlage aufgebracht ist,
- der Temperatursensor (1) auf der Rückseite (6.1) eines einen guten Wärmetransport gewährleistenden Mittels (6) mit gutem thermischen Kontakt zum Mittel (6) befestigt ist und
- der Temperatursensor (1) rückseitig durch ein wannenförmiges Kunststoffgehäuse (1.1) zum Innenraum des Bedienteils (2) weisend geschützt ist.

2. Anordnung nach Anspruch 1, **dadurch gekennzeichnet, dass** der Temperatursensor (1) in Ebene mit einer umliegenden Frontblende (5) des Bedienteils (2) liegen oder aber gegenüber seiner Umgebung in den Fahrzeuginnenraum hinausragen kann.

3. Anordnung nach Anspruch 1 oder 2, **dadurch gekennzeichnet, dass** das einen guten Wärmetransport gewährleistenden Mittel (6) ein dünnes Blech ist.

4. Anordnung nach Anspruch 1 oder 2, **dadurch gekennzeichnet, dass** das einen guten Wärmetransport gewährleistenden Mittel (6) ein Kunststoffträger mit einer dünnen Metallfolie oder ein anderes Material ist, welches einen guten Wärmetransport zwischen dem Temperatursensor (1) und dem Fahrgastraum gewährleistet.

5. Anordnung nach einem der Ansprüche, **dadurch gekennzeichnet, dass** ein Hohlraum (1.2) zwischen dem einen guten Wärmetransport gewährleistenden Mittel (6) und dem Kunststoffteil (1.1) des Temperatursensors (1) mit einem wärmeisolierenden Mittel gefüllt ist.

6. Anordnung nach einem der Ansprüche, **dadurch gekennzeichnet, dass** das einen guten Wärmetransport gewährleistenden Mittel (6), das den Temperatursensor (1) trägt, an wenigen Auflagepunkten mit der Frontblende (5) und dem Kunststoffgehäuse (1.1) verbunden ist.

7. Anordnung nach einem der Ansprüche, **dadurch gekennzeichnet, dass** ein Referenztemperatursensor (7) zur Ermittlung der Umgebungstemperatur des Temperatursensors (1) an der Innenseite (5.2) der Frontblende (5) an der Position positioniert wird, an der der Temperatursensor (1) an der Außenseite (5.1) des Bedienteils (2) angebracht ist.

8. Anordnung nach einem der Ansprüche, **dadurch gekennzeichnet, dass** ein Fotosensor (4) zur Ermittlung der Intensität der Sonneneinstrahlung auf den Temperatursensor (1) in unmittelbarer Nähe zu diesem positioniert ist.

## Claims

1. Arrangement composed of a temperature sensor (1) and an air-conditioning system operator control, for determining the temperature of a passenger compartment, **characterized in that**
- the temperature sensor (1) is mounted on the outside (5.1) of an air-conditioning system operator control (2) of a heating, ventilating and/or air-conditioning system,
- the temperature sensor (1) is attached to the rear (6.1) of a means (6) which ensures that heat is conveyed satisfactorily, with good thermal contact with the means (6), and
- the temperature sensor (1) is protected on the rear by a trough-shaped plastic housing (1.1) pointing toward the interior of the operator control (2).

2. Arrangement according to Claim 1, **characterized in that** the temperature sensor (1) can lie on a plane with a surrounding front panel (5) of the operator control (2) or else can project, with respect to its surroundings, into the passenger compartment of the vehicle.

3. Arrangement according to Claim 1 or 2, **characterized in that** the means (6) which ensures that heat is conveyed satisfactorily is a piece of thin sheet metal.

4. Arrangement according to Claim 1 or 2, **characterized in that** the means (6) which ensures that heat is conveyed satisfactorily is a plastic carrier with a thin metal foil or some other material which ensures that heat is conveyed satisfactorily between the temperature sensor (1) and the passenger compartment.

5. Arrangement according to one of the claims, **characterized in that** a cavity (1.2) between the means (6) which ensure that heat is conveyed satisfactorily and the plastic part (1.1) of the temperature sensor (1) is filled with a thermally insulating means.

6. Arrangement according to one of the claims, **characterized in that** the means (6) which ensures that heat is conveyed satisfactorily and which is fitted with the temperature sensor (1) is connected to the front panel (5) and to the plastic housing (1.1) at a small number of support points.

7. Arrangement according to one of the claims, **characterized in that** a reference temperature sensor (7) for determining the temperature of the surroundings of the temperature sensor (1) is positioned in the inside (5.2) of the front panel (5) at the position at which the temperature sensor (1) is mounted on the outside (5.1) of the operator control (2).

8. Arrangement according to one of the claims, **characterized in that** a photosensor (4) for determining the intensity of the solar radiation impinging on the temperature sensor (1) is positioned in the direct vicinity of said temperature sensor (1).

## Revendications

1. Disposition constituée d'un capteur de température (1) et d'une partie de commande de climatisation, destinée à déterminer la température d'espace intérieur, **caractérisée en ce que**
- le capteur de température (1) est placé sur la face extérieure (5.1) d'une partie de commande de climatisation (2) d'un équipement de chauffage, de ventilation et/ou de climatisation,
- le capteur de température (1) est fixé sur la face arrière (6.1) d'un moyen (6) garantissant un bon transport de chaleur, en présentant un bon contact thermique avec le moyen (6) et
- le capteur de température (1) est protégé sur le côté arrière par un boîtier en matière synthétique (1.1) en forme de cuve indiquant dans la direction de l'espace intérieur de la partie de commande (2).

2. Disposition selon la revendication 1, **caractérisée en ce que** le capteur de température (1) peut se trouver dans le même plan qu'un cadre frontal environnant (5) de la partie de commande (2) ou peut toutefois dépasser de son environnement dans l'espace intérieur du véhicule.

3. Disposition selon la revendication 1 ou 2, **caractérisée en ce que** le moyen (6) garantissant un bon transport de chaleur est une tôle fine.

4. Disposition selon la revendication 1 ou 2, **caractérisée en ce que** le moyen (6) garantissant un bon transport de chaleur est un substrat en matière synthétique comportant une fine feuille métallique ou est un autre matériau garantissant un bon transport de chaleur entre le capteur de température (1) et le compartiment pour les passagers.

5. Disposition selon l'une quelconque des revendications, **caractérisée en ce qu'**un espace creux (1.2) compris entre le moyen (6) garantissant un bon transport de chaleur et la partie en matière synthétique (1.1) du capteur de température (1) est rempli d'un agent isolant thermiquement.

6. Disposition selon l'une quelconque des revendications, **caractérisée en ce que** le moyen (6) garantissant un bon transport de chaleur, qui porte le capteur de température (1), est raccordé sur quelques points d'appui à l'écran frontal (5) et au boîtier en matière synthétique (1.1).

7. Disposition selon l'une quelconque des revendications, **caractérisée en ce qu'**un capteur de température de référence (7) destiné à déterminer la température de l'environnement du capteur de température (1) est positionné sur la face intérieure (5.2) du cadre frontal (5) dans la position dans laquelle le capteur de température (1) est placé sur la face extérieure (5.1) de la partie de commande (2).

8. Disposition selon l'une quelconque des revendications, **caractérisée en ce qu'**un photocapteur (4) destiné à déterminer l'intensité du rayonnement solaire sur le capteur de température (1) est positionné à proximité immédiate de celui-ci.
